# EUROPEAN PATENT SPECIFICATION

(11) **EP 2 452 835 B1**
(45) Date of publication and mention of the grant of the patent: **25.09.2013**
(21) Application number: 11189074.5
(22) Date of filing: 15.11.2011
(51) Int. Cl.: B60C 11/00

(54) **Pneumatic tire**
Luftreifen
Pneu

(30) Priority: 15.11.2010 JP 2010255064
(43) Date of publication of application: 16.05.2012
(73) Proprietor: Toyo Tire & Rubber Co. Ltd., Osaka-shi, Osaka 550-8661 (JP)
(72) Inventor: Segawa, Masahiro, Osaka-shi, Osaka 550-8661 (JP)
(74) Representative: Sajda, Wolf E.

(56) References cited:
- EP-A1- 0 715 974
- EP-A1- 0 818 501
- JP-A- 2000 118 212
- JP-A- 2009 126 291
- US-A1- 2004 069 386

## Description

### BACKGROUND OF THE INVENTION

### Field of the Invention

The present invention relates to a pneumatic tire which can improve a wet braking performance without deteriorating a wear performance and a steering stability. In particular, the invention relates to a pneumatic tire as set forth in the preamble of claim 1. Such a tire is known from EP-A-0818501.

### Description of the Related Art

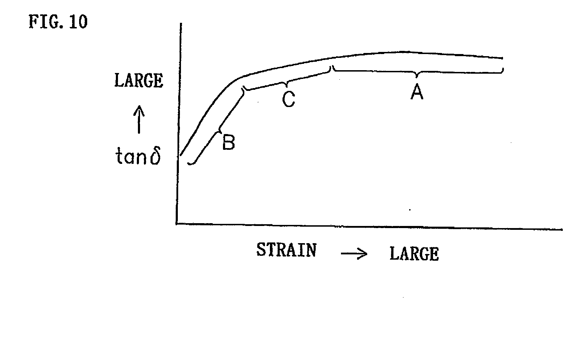

It has been known that it is preferable to enlarge tan δ (loss tangent) of a tread rubber, in order to improve a braking performance on a wet road surface (hereinafter, refer to as a wet braking performance). Further, tan δ has a relation which depends on a strain as exemplified in FIG. 10, and it can be said that the wet braking performance is subject to a shear strain in a tire back and forth direction which is generated in a tread rubber at a time of braking, and tan δ corresponding thereto. However, in the conventional tire, it has been hard to control the shear strain which is generated at a time of braking as mentioned below, there is room for improvement of this.

In other words, in a tread rubber having a laminated structure of a cap rubber and a base rubber, in the case that the cap rubber is set to a low elasticity, the cap rubber excessively deforms, and a shear strain at a time of braking becomes too large, thereby tending to come to a state of a region A in FIG. 10. In the region A in which tan 8 is saturated, there is a risk that a slip is generated on a road surface so as to encourage a generation of an irregular wear, and the wear performance tends to be lowered.
On the other hand, in the case that the base rubber is set to a low elasticity, the shear strain at a time of braking becomes smaller so as to tend to come to a state of a region B. In the region B in which tan 8 is smaller, since it is impossible to effectively utilize a viscous element of the rubber, the braking performance can not be sufficiently achieved.

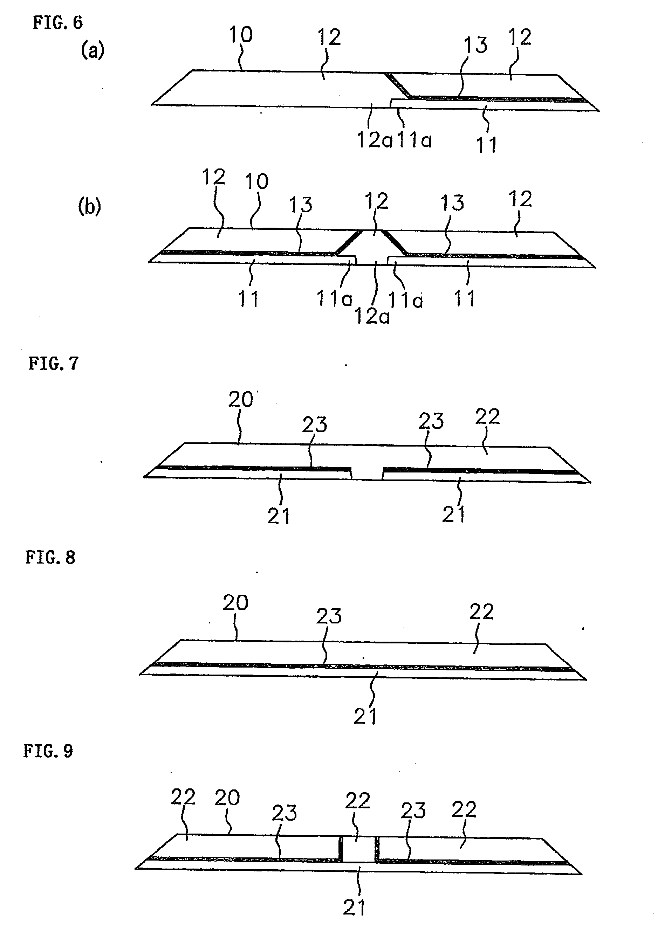

Further, as a result of a research by the inventor of the present invention, it has been found that it is possible to moderately enlarge a shear strain generated at a time of braking and achieve a state of the region C which is advantageous in both of the braking performance and the wear performance, by laying out a tread rubber 20 by a cushion rubber 23 having a lower elasticity in comparison with a cap rubber 22 and a base rubber 21, as shown in FIG. 8.
However, in the case mentioned above, a shear rigidity in a tire lateral direction in the cap rubber laid out by the cushion rubber is lowered, a sufficient cornering power can not be obtained at a time of turning, and a steering stability tends to be deteriorated.

In a pneumatic tire described in Japanese Unexamined Patent application Publication JP-A-2002-205 513, tan δ of a base rubber is made smaller than that of a cap rubber, and a storage elastic modulus E' of the base rubber is set to a range between 80 and 120 % of that of the cap rubber. However, this tire does not disclose a structure for moderately enlarging a shear strain in a tire back and forth direction generated in a tread rubber, but hardly has an effect of improving the wet braking performance.

In the publication mentioned above, the effect with respect to the wet braking performance is defined as a maintaining effect by the fact that the cap rubber having a small tan δ is not exposed to a contact surface.

The document US 2004/0 069 386 A1 discloses a pneumatic tire which is constructed with an electrically conductive tire tread that defines a channel extending radially inwards to a tread base rubber having a relatively high electrical resistivity so as to provide a conductivity path to a belt layer within the tire. In such a conventional pneumatic tire, a conductivity path extending from the belt layer through a belt cushion section to a carcass section of the tire can also be provided.

The document JP 2009-126 291 A discloses a further conventional pneumatic tire which is intended to discharge static electricity of a vehicle to a road surface without degrading uniformity. For this purpose, the tread rubber of the pneumatic tire includes a base portion made of an electrically non-conductive rubber that is arranged on the inner side in the radial direction and extends continously from the side of one tread end to the side of the other tread end. The tread rubber further includes a cap portion made of an electrically non-conductive rubber that is arranged on the outer side in the radial direction of the base portion and serves as a ground surface. Furthermore, the tread rubber includes a conducting portion made of an electrically conductive rubber that exposes to the ground surface at one end, while the other end is connected with a side-wall ruber that is electrically conductive with a rim, when the rim is assembled.

### SUMMARY OF THE INVENTION

The present invention was made by taking the actual condition mentioned above into consideration, and an object of the present invention is to provide a pneumatic tire which can improve a wet braking performance without deteriorating a wear performance and a steering stability.

The object can be achieved by the following present invention. That is, the present invention provides a pneumatic tire comprising a tread rubber provided in a tread portion, the tread rubber comprising a cap rubber which forms a contact surface, a base rubber which is arranged in an inner radial side of the cap rubber, and a cushion rubber which is formed by a rubber having a smaller storage elastic modulus E' than the cap rubber and the base rubber. The pneumatic tire according to the invention is characterized in that the cap rubber has a penetration portion which reaches a bottom surface of the tread rubber from the contact surface in a center region coming to a center side at the bottom surface in a tread width direction, and the base rubber is terminated by the penetration portion, and in that the cushion rubber extends from a side surface of the tread rubber toward the center region along the base rubber, and bends to an outer peripheral side from a portion near a terminating portion of the base rubber so as to reach the contact surface.

In accordance with the pneumatic tire of the present invention, the shoulder region coming to the outer side in the tread width direction is laid out by the cushion rubber in which the storage elastic modulus E' is smaller than the cap rubber and the base rubber. In accordance with this, the laid out shoulder region easily moves in the tire back and forth direction, and it is possible to moderately enlarge the shear strain generated at a time of braking.
The shoulder region is larger in contribution to the braking performance in comparison with the center region, and it is possible to improve the wet braking performance without deteriorating the wear performance by laying out the shoulder region by the cushion rubber as mentioned above.

Further, in the tire in accordance with the present invention, in the center region coming to the center side in the tread width direction, the cap rubber has the penetration portion which reaches the bottom surface of the tread rubber from the contact surface, the penetration portion can serve as a support column which sets up against a shear deformation in the tire lateral direction.
In accordance with this, it is possible to maintain the shear rigidity in the tire lateral direction in the cap rubber which is laid out by the cushion rubber, it is possible to achieve a sufficient cornering power at a time of turning, and it is possible to well secure the steering stability.

In the present invention, it is preferable that the cushion rubber is provided in both sides in a tread width direction. In accordance with the structure mentioned above, since the shoulder region laid out by the cushion rubber easily moves in the tire back and forth direction in both sides in the tread width direction, it is possible to more effectively improve the wet braking performance. Further, the structure mentioned above is beneficial for securing a uniformity of the tire.

In the present invention, it is preferable that the cushion rubber extends in a tread width direction from the side surface of the tread rubber through a portion between the cap rubber and the base rubber, In accordance with the structure mentioned above, since the shear deformation in the tire lateral direction which is generated in the tread rubber can be easily held down by the penetration portion of the cap rubber, it is possible to enhance the cornering power so as to better secure the steering stability.

In the present invention, it is preferable that a storage elastic modulus E' of the cushion rubber is equal to or less than 90 % of a storage elastic modulus E' of the cap rubber and the base rubber. In accordance with the structure mentioned above, it is possible to secure a mobility in the tire back and forth direction of the shoulder region which is laid out by the cushion rubber so as to more securely improve the wet braking performance.

### BRIEF DESCRIPTION OF THE DRAWINGS

- FIG. 1: is a sectional view of a tire meridian showing one example of a pneumatic tire according to the present invention;
- FIG. 2: is a cross sectional view schematically showing a tread rubber shown in FIG. 1;
- FIG. 3: is a cross sectional view showing a tread rubber in accordance with another embodiment of the present invention;
- FIG. 4: is a cross sectional view showing a tread rubber in accordance with another embodiment of the present invention;
- FIG. 5: is a cross sectional view showing a tread rubber in accordance with another embodiment of the present invention;
- FIG. 6: is a cross sectional view showing a tread rubber in accordance with another embodiment of the present invention;
- FIG. 7: is a cross sectional view showing a tread rubber in accordance with the Comparative Example 1;
- FIG. 8: is a cross sectional view showing a tread rubber in accordance with the Comparative Example 2;
- FIG. 9: is a cross sectional view showing a tread rubber in accordance with the Comparative Example 3;
- FIG. 10: is a graph exemplifying a strain dependency of tan δ.

### DETAILED DESCRIPTION OF PREFERRED EMBODIMENTS

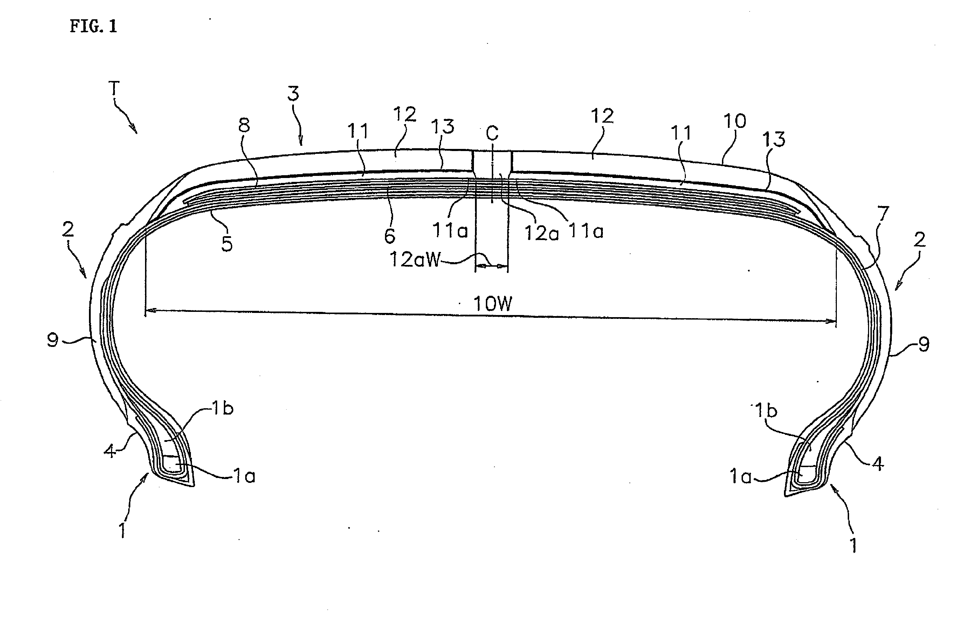

An embodiment of the present invention will be explained with reference to the drawings. A pneumatic tire T shown in FIG. 1 includes a pair of bead portions 1, side wall portions 2 extending from the bead portions 1 to outer side in a tire diametrical direction, a tread portion 3 connected to outer ends in a tire diametrical direction of the side wall portions 2. The bead portion 1 includes an annular bead 1 a composed of a bundle of steel wires or the like sheathed with rubber and a bead filler 1b of hard rubber disposed therein.

A toroid-shaped carcass layer 7 is arranged between the pair of bead portions 1, and an end portion thereof is fixed via the bead 1a being wound thereon. The carcass layer 7 is constructed by at least one carcass ply (two carcass plies in the present embodiment), and the carcass ply is formed by covering a cord extending at an angle of approximately 90° with respect to the tire equator C with a topping rubber. The carcass layer 7 is provided with an inner liner rubber 5 for maintaining air pressure on the inner periphery thereof.

The bead portion 1 of the carcass layer 7 is provided with a rim strip rubber 4 on the outer periphery thereof, which abuts on a rim (not shown). The sidewall portion 2 of the carcass layer 7 is provided with a side wall rubber 9 on the outer periphery thereof.
A belt layer 6 which is constructed by a plurality of belt plies (two belt plies in the present embodiment), and a belt reinforcing layer 8 which is laminated in an outer periphery of the belt layer 6 are arranged in an outer periphery of the tread portion 3 of the carcass layer 7, and a tread rubber 10 is provided in an outer periphery of them. The belt reinforcing layer 8 may be omitted as occasion demands.

The tread rubber 10 is provided with a cap rubber 12 which constructs a contact surface, a base rubber 11 which is arranged in an inner peripheral side of the cap rubber 12, and a cushion rubber 13 which is formed by a rubber having a smaller storage elastic modulus E' than the cap rubber 12 and the base rubber 11.
The storage elastic modulus E' is measured under a condition of a temperature of 23 °C, a frequency of 10 Hz, a static strain of 10 % and a dynamic strain of 1 % by using a visco-elasticity spectrometer tester manufactured by Toyo Seiki Co., Ltd.

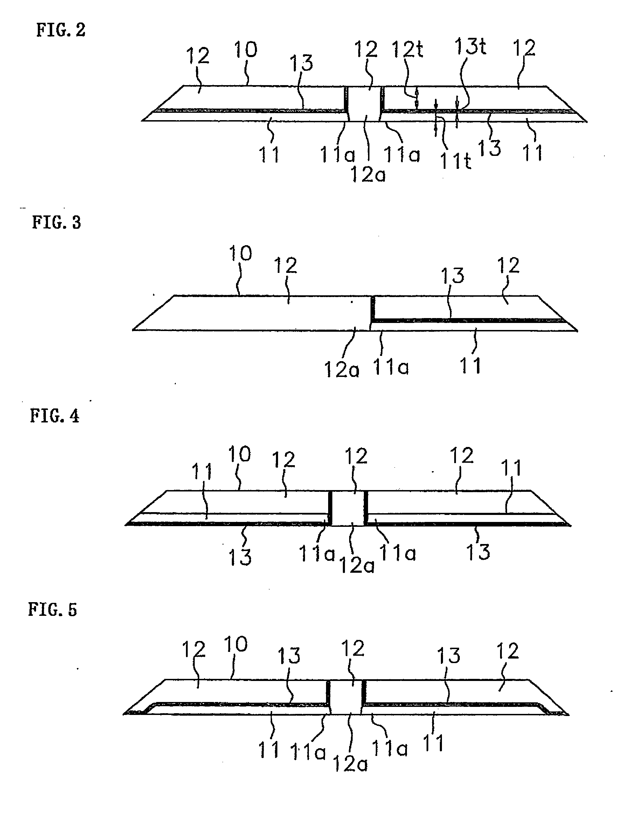

As shown in Figs. 1 and 2, in the tread rubber 10, in a center region coming to a center side in a tread width direction, the cap rubber 12 has a penetration portion 12a which reaches a bottom surface of the tread rubber 10 from a contact surface, and the base rubber 11 is terminated by the penetration portion 12a.
Further, the cushion rubber 13 extends toward the center region along the base rubber 11 from a side surface of the tread rubber 10, and bends to an outer peripheral side from a portion near a terminating portion 11 a of the base rubber 11 so as to reach the contact surface.

The shoulder region coming to an outer side in the tread width direction is laid out by the cushion rubber 13 which extends like an L-shaped form. The laid out shoulder region, that is, a region surrounded by the side surface and the outer peripheral surface of the tread rubber 10 and the cushion rubber 13 easily moves in the tire back and forth direction, whereby it can moderately enlarge a shear strain which is generated at a time of braking.
Further, since the penetration portion 12a of the cap rubber 12 can serve as a support column which sets up against a shear deformation in the tire lateral direction, it is possible to maintain the shear rigidity in the tire lateral direction in the cap rubber 12. As a result, it is possible to improve a wet braking performance without deteriorating a wear performance and a steering stability.

In the present embodiment, since the cushion rubber 13 is provided in both sides in the tread width direction, it is possible to more effectively improve the wet braking performance. Further, the lateral unbalance of the thickness is apt to be avoided by employing a line symmetry structure with respect to the tire equator **C**, and it is beneficial for securing the uniformity of the tire.

A width 12aW of the penetration portion 12a formed at a missing position of the base rubber 11 is preferably between 2 and 10 % of a width 10W of the tread rubber 10. It is possible to well maintain a shear rigidity in a tire lateral direction in the tread rubber 10 by making it equal to or more than 2 %, and it becomes advantageous for enhancing a cornering power so as to secure a steering stability.
Further, it is possible to secure a size of a shoulder region which is laid out by the cushion rubber 13 by making it equal to or less than 10 %, and it becomes advantageous for improving the wet braking performance.

In the present embodiment, the cushion rubber 13 extends in the tread width direction from the side surface of the tread rubber 10 through a portion between the cap rubber 12 and the base rubber 11. Accordingly, in comparison with the structure such as FIG. 4 mentioned below, the thickness of the shoulder region which is laid out by the cushion rubber 13 is suppressed, the shear rigidity in the tire lateral direction in the cap rubber 12 can be easily retained by the penetration portion 12a, and it is possible to enhance the cornering power so as to better secure the steering stability.

It is preferable that the storage elastic modulus E' of the cushion rubber 13 is equal to or less than 90 % of the storage elastic modulus E' of the cap rubber 12 and the base rubber 11. In other words, in the case of setting a storage elastic modulus of the cushion rubber 13 to 13E', setting a storage elastic modulus of the cap rubber 12 to 12E' and setting a storage elastic modulus of the base rubber 11 to 11E', it is preferable to satisfy a relationship 13E' ≤ 0.9 * 12E' and 13E' ≤ 0.9 * 11E'. In accordance with this, it is possible to more effectively improve the wet braking performance.

The storage elastic modulus 13E' of the cushion rubber 13 is set, for example, to between 0.9 MPa and 3.0 MPa, and the storage elastic modulus 12E' of the cap rubber 12 and the storage elastic modulus 11E' of the base rubber 11 are set, for example, to between 1.0 MPa and 5.0 MPa.
The cap rubber 12 and the base rubber 11 may have the same storage elastic modulus E', however, in the light of securing the wear performance, it is preferable that the storage elastic modulus 12E' of the cap rubber 12 is larger than the storage elastic modulus 11E' of the base rubber 11.

As a thickness 13t of the cushion rubber 13, a range of 0.3 mm to 2 mm is exemplified. If the thickness is less than 0.3 mm, the effect of making the laid out shoulder region easily move in the tire back and forth direction tends to become smaller, and if it goes beyond 2 mm, the volume of the cushion rubber 13 tends to become larger than necessary. Further, 4 mm to 15 mm is exemplified as a thickness 12t of the cap rubber 12, and 1 to 4 mm is exemplified as a thickness 11t of the base rubber 11.

A molding surface of a tire molding metal mold is pressed to an outer peripheral surface of the tread rubber 10 at a time of a cure, and various tread patterns are formed in accordance with a use condition. The shape of the tread pattern is not particularly limited, but a groove may be set to an exposure position of the cushion rubber 13 on the contact surface.
Further, in light of securing the shear rigidity in the tire lateral direction in the tread rubber 10, it is preferable to set a rib which continuously extends in the tire circumferential direction, at a position of the penetration portion 12a of the cap rubber 12.

The pneumatic tire T is the same as the normal pneumatic tire except that the cushion rubber 13 is provided in the tread rubber 10, and the known material, shape, structure, manufacturing method and the like can be applied to the present invention. The cushion rubber can be formed by arranging a rubber sheet having a low elasticity in a forming process of the tread rubber, however, it is possible to utilize a ribbon winding method and an extruding method which have been conventionally known.

In the matter mentioned above, the ribbon winding method is a construction method of spirally winding a band-like uncured rubber ribbon having a small width and a small thickness along a tire circumferential direction, and forming a rubber member having a desired cross sectional shape.
Further, the extruding method is a construction method of cutting a rubber member which is extruded in a predetermined cross sectional shape at a desired length, and connecting end portions to each other so as to form an annular shape, and may utilize a co-extrusion with the cap rubber or the base rubber.

### Another Embodiment

(1) In the embodiment mentioned above, there is shown an example in which the cushion rubber 13 is provided in both sides in the tread width direction, however, may be provided only in one side in the tread width direction as shown in FIG. 3. Even in this case, since the cap rubber 12 has the penetration portion 12a which reaches the bottom surface of the tread rubber 10 from the contact surface in the center region, it is possible to obtain the effect of maintaining the shear rigidity in the tire lateral direction as mentioned above.
Further, in this embodiment, the base rubber 11 may be provided in another side in the tread width direction in the same manner as FIG. 2, and the cushion rubber 13 may be further provided in the inner periphery of the base rubber 11 in the same manner as FIG. 4 mentioned below.

In the structure mentioned above, it is desirable to make the installation in such a manner that the shoulder region in the side in which the cushion rubber 13 is provided (the right shoulder region in FIG. 3) comes to the inner side of the vehicle. This is because a contribution to the braking performance becomes larger in the inner side of the vehicle by an application of a negative camber. A specification of an installing direction with respect to the vehicle is carried out by a display (for example, "INSIDE" or "OUTSIDE") in the side wall portion.

(2) In the embodiment mentioned above, there is shown the example in which the cushion rubber 13 extends in the tread width direction from the side surface of the tread rubber 10 through the portion between the cap rubber 12 and the base rubber 11, however, it may pass through an inner periphery of the base rubber 11 as shown in FIG. 4.
Further, as shown in FIG. 5, in the case that the base rubber 11 is not exposed to the side surface of the tread rubber 10, the cushion rubber 13 may pass through the portion between the cap rubber 12 and the base rubber 11 via the inner periphery of the cap rubber 12 from the side surface of the tread rubber 10.

(3) In the embodiment mentioned above, there is shown an example in which the cushion rubber 13 bends from the portion near the terminating portion 11a of the base rubber 11, and rises up approximately in parallel to the thickness direction (the tire diametrical direction) of the tread rubber 10, however, it may be inclined and rises up in a thickness direction of the tread rubber 10 as shown in FIG. 6.

### Example

An example tire which concretely shows the structure and effect of the present invention will be explained. Tires to be evaluated are structured such that the tire size is 205/55R16, the pneumatic pressure is 220 kPa, and the rim size is 16 x 6.5 - JJ. With regard to each of items of evaluation, the evaluation was carried out as follows.

### (1) Wet Braking Performance

A braking distance at a time of traveling on a wet road surface and slowing down a traveling speed from 100 km/h to 0 km/h was measured and evaluated by an index number in which a result of a Comparative Example 1 is set to 100. The smaller the numerical value is, the shorter the braking distance is, thereby indicating an excellent wet braking performance.

### (2) Wear Performance

A difference of elevation (a heel and toe wear amount) between a pedaling side and a kicking side of a block provided in the shoulder region was measured after traveling for 8000 km, and was evaluated by an index number in which a result of the Comparative Example 1 is set to 100. The smaller the numerical value is, the smaller the heel and toe wear amount is, thereby indicating an excellent wear performance.

### (3) Steering Stability (Cornering Power)

A cornering power was measured by using a flat belt type cornering tester and was evaluated by an index number in which a result of the Comparative Example 1 is set to 100. The larger the numerical value is, the larger the cornering power is, thereby indicating an excellent steering stability.

Figs. 7 to 9 show a structure of the tread rubbers in the Comparative Examples 1 to 3. Each of the tread rubbers 20 is provided with a cap rubber 22 which forms the contact surface, a base rubber 21 which is arranged in an inner peripheral side thereof, and a cushion rubber 23 in which a storage elastic modulus E' is smaller than them. Structures of the tread rubbers in the Comparative Example 4 and Examples 1 to 4 are respectively as shown in Figs. 2 to 4 and 6. The tire structures in the examples are in common except that the tread rubber, and the thicknesses of the cap rubber, the base rubber and the cushion rubber are the same. Results of the evaluation are shown in Table 1.

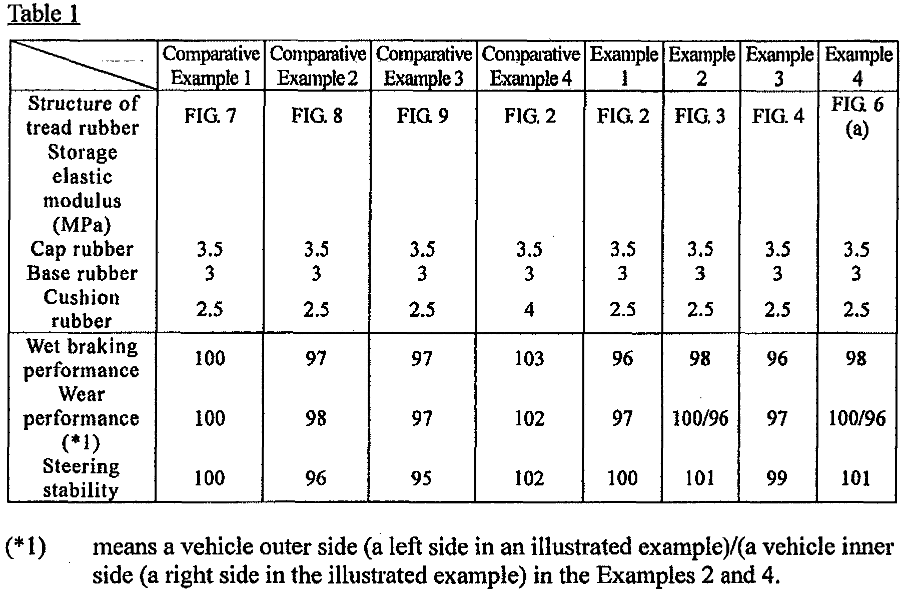

In the Comparative Example 1, the region laid out by the cushion rubber is not provided, and the motion in the tire back and forth direction of the cap rubber tends to be constrained, thereby the wet braking performance can not be sufficiently improved. In the Comparative Examples 2 and 3, the cornering power is lower than the other examples, and this is thought because the shear rigidity in the tire lateral direction in the cap rubber laid out by the cushion rubber can not be sufficiently retained.
In the Comparative Example 4, since the storage elastic modulus E' of the cushion rubber is high, the effect of improving the wet braking performance can not be obtained. On the contrary, in the Examples 1 to 4, the wet braking performance can be improved without deteriorating the wear performance and the steering stability.

### List of Reference Signs

- 1: = bead portion
- 1a: = annular bead
- 1b: = bead filler
- 2: = side wall portions
- 3: = tread portion
- 4: = rim strip rubber
- 5: = inner liner rubber
- 6: = belt layer
- 7: = carcass layer
- 8: = belt reinforcing layer
- 9: = side wall rubber
- 10: = tread rubber
- 10W: = width of tread rubber 10
- 11: = base rubber
- 11a: = terminating portion
- 11t: = thickness of base rubber 11
- 12: = cap rubber
- 12a: = penetration portion
- 12aW: = width of penetration portion 12a
- 12t: = thickness of cap rubber 12
- 13: = cushion rubber
- 20: = tread rubber
- 21: = base rubber
- 22: = cap rubber
- 23: = cushion rubber
- C: = tire equator
- T: = tire

## Claims

1. A pneumatic tire comprising:
a tread rubber (10) provided in a tread portion (3), the tread rubber (10) comprising a cap rubber (12) which forms a contact surface, a base rubber (11) which is arranged in an inner radial side of the cap rubber (12), and a cushion rubber (13) which is formed by a rubber having a smaller storage elastic modulus E' than the cap rubber (12) and the base rubber (11);
**characterized in that** the cap rubber (12) has a penetration portion (12a) which reaches a bottom surface of the tread rubber (10) from the contact surface in a center region coming to a center side at the bottom surface in a tread width direction, and the base rubber (11) is terminated by the penetration portion (12a); and
**in that** the cushion rubber (12) extends from a side surface of the tread rubber (10) toward the center region along the base rubber (11), and bends to an outer peripheral side from a portion near a terminating portion (11a) of the base rubber (11) so as to reach the contact surface.

2. The pneumatic tire according to claim 1,
wherein the cushion rubber (13) is provided in both sides in the tread width direction.

3. The pneumatic tire according to claim 1 or 2,
wherein the cushion rubber (13) extends in the tread width direction from the side surface of the tread rubber (10) through a portion between the cap rubber (12) and the base rubber (11).

4. The pneumatic tire according to any of claims 1 to 3,
wherein the storage elastic modulus E' of the cushion rubber (13) is equal to or less than 90 % of a storage elastic modulus E' of the cap rubber (12) and the base rubber (11).

## Patentansprüche

1. Luftreifen, der folgendes aufweist:
ein Laufflächengummimaterial (10), das in einem Laufflächenbereich (3) vorgesehen ist, wobei das Laufflächengummimaterial (10) ein Abdeck-Gummimaterial (12), das eine Kontaktfläche bildet, ein Basis-Gummimaterial (11), das auf einer radialen Innenseite des Abdeck-Gummimaterials (12) angeordnet ist, sowie ein Dämpfungs-Gummimaterial (13) aufweist, das aus einem Gummimaterial mit einem geringeren Speicher-Elastizitätsmodul E' als das Abdeck-Gummimaterial (12) und das Basis-Gummimaterial (11) gebildet ist;
**dadurch gekennzeichnet,**
**daß** das Abdeck-Gummimaterial (12) einen Penetrationsbereich (12a), der ausgehend von der Kontaktfläche eine Bodenfläche des Laufflächengummimaterials (10) erreicht, in einem zentralen Bereich bis zu einem zentralen Seitenbereich an der Bodenfläche in Laufflächen-Breitenrichtung aufweist, wobei das Basis-Gummimaterial (11) von dem Penetrationsbereich (12a) abgeschlossen wird; und
**daß** sich das Dämpfungs-Gummimaterial (12) von einer Seitenfläche des Laufflächen-Gummimaterials (10) entlang dem Basis-Gummimaterial (11) in Richtung auf den zentralen Bereich erstreckt und von einem Bereich in der Nähe eines Endbereichs (11a) des Basis-Gummimaterials (11) zu einer peripheren äußeren Seite gekrümmt ist, so daß es die Kontaktfläche erreicht.

2. Luftreifen nach Anspruch 1,
wobei das Dämpfungs-Gummimaterial (13) in Laufflächen-Breitenrichtung auf beiden Seiten vorgesehen ist.

3. Luftreifen nach Anspruch 1 oder 2,
wobei sich das Dämpfungs-Gummimaterial (13) in Laufflächen-Breitenrichtung von der Seitenfläche des Laufflächen-Gummimaterials (10) über einen Bereich zwischen dem Abdeck-Gummimaterial (12) und dem Basis-Gummimaterial (11) erstreckt.

4. Luftreifen nach einem der Ansprüche 1 bis 3,
wobei der Speicher-Elastizitätsmodul E' des Dämpfungs-Gummimaterials (13) kleiner als oder gleich 90 % des Speicher-Elastizitätsmoduls E' des Abdeck-Gummimaterials (12) und des Basis-Gummimaterials (11) ist.

## Revendications

1. Bandage pneumatique comprenant :
un caoutchouc de roulement (10) prévu dans une portion formant bande de roulement (3), le caoutchouc de roulement (10) comprenant un caoutchouc de couverture (12) qui forme une surface de contact, un caoutchouc de base (11) qui est agencé dans un côté radial intérieur du caoutchouc de couverture (12), et un caoutchouc coussin (13) qui est formé par un caoutchouc ayant un module d'élasticité au stockage E' plus faible que le caoutchouc de couverture (12) et que le caoutchouc de base (11) ;
**caractérisé en ce que** le caoutchouc de couverture (12) a une portion de pénétration (12a) qui atteint une surface inférieure du caoutchouc de roulement (10) depuis la surface de contact dans une région centrale venant sur un côté central au niveau de la surface inférieure, dans une direction en largeur de la bande de roulement, et le caoutchouc de base (11) est terminé par la portion de pénétration (12a) ; et
**en ce que** le caoutchouc coussin (12) s'étend depuis une surface latérale du caoutchouc de roulement (10) vers la région centrale le long du caoutchouc de base (11), et est cintré vers un côté périphérique extérieur depuis une portion proche d'une portion de terminaison (11a) du caoutchouc de base (11) de manière à atteindre la surface de contact.

2. Bandage pneumatique selon la revendication 1,
dans lequel le caoutchouc coussin (13) est prévu dans les deux côtés dans la direction en largeur de la bande de roulement.

3. Bandage pneumatique selon la revendication 1 ou 2,
dans lequel le caoutchouc coussin (13) s'étend dans la direction en largeur de la bande de roulement depuis la surface latérale du caoutchouc de roulement (10) à travers une portion entre le caoutchouc de couverture (12) et le caoutchouc de base (11).

4. Bandage pneumatique selon l'une quelconque des revendications 1 à 3, dans lequel le module d'élasticité au stockage E' du caoutchouc coussin (13) est égal ou inférieur à 90 % d'un module d'élasticité au stockage E' du caoutchouc de couverture (12) et du caoutchouc de base (11).
